# EUROPÄISCHE PATENTSCHRIFT

(11) **EP 1 402 200 B1**
(45) Veröffentlichungstag und Bekanntmachung des Hinweises auf die Patenterteilung: **16.05.2007**
(21) Anmeldenummer: 02760202.8
(22) Anmeldetag: 01.07.2002
(51) Int. Cl.: F16H 1/12

(54) **ZAHNRAD MIT TORUSFÖRMIGER, GEKRÜMMTER WÄLZFLÄCHE UND ZAHNRADGETRIEBE MIT EINEM SOLCHEN ZAHNRAD**
TOOTHED WHEEL WITH A TOROIDAL, CURVED PITCH SURFACE AND TOOTHED GEARING WITH SAID TOOTHED WHEEL
ROUE DENTEE A SURFACE DE ROULEMENT CINTREE TORIQUE ET ENGRENAGE DOTE D'UNE TELLE ROUE

(30) Priorität: 03.07.2001 CH 122401; 13.07.2001 CH 131101
(43) Veröffentlichungstag der Anmeldung: 31.03.2004
(73) Patentinhaber: Hiltbrand, Roland, 4800 Zofingen (CH)
(72) Erfinder: Hiltbrand, Roland, 4800 Zofingen (CH)
(74) Vertreter: OK pat AG
(86) Internationale Anmeldenummer: PCT/EP2002/007148
(87) Internationale Veröffentlichungsnummer: WO 2003/004904

(56) Entgegenhaltungen:
- DE-C- 394 616
- DE-U- 29 906 818
- FR-A- 1 195 828
- NL-A- 9 201 836
- US-A- 1 422 000

## Beschreibung

Die Erfindung betrifft ein Zahnrad mit gekrümmter Wälzfläche und ein Zahnradgetriebe mit einem solchen Zahnrad. Vorzugsweise umfasst das Zahnradgetriebe ein Radpaar mit einem Zahnrad mit torusförmiger, gekrümmter Wälzfläche und mit einem Zahnrad mit zylinderförmiger Aussenverzahnung.

### Stand der Technik

Es gibt zahlreiche verschiedene Konfigurationen und Konstellationen von Zahnradpaaren, bei denen zwei Zahnräder miteinander in Wechselwirkung stehen. Die Zahnradpaare können je nach Einsatzzweck und -gebiet entsprechend dimensioniert und ausgelegt werden. Ein Zahnradpaar bildet ein einfaches Getriebe oder kann als Bestandteil eines Getriebezuges eingesetzt werden.

Nach der gegenseitigen Lage der Radachsen bzw. der Wellen eines Zahnradpaares und nach der Richtung der Flanken werden zwei Getriebebauarten unterschieden: nämlich Wälzgetriebe und Schraubwälzgetriebe.

Stirnradgetriebe und Kegelradgetriebe sind Beispiele für Wälzgetriebe. Stirnrad-Schraubgetriebe, Kegelrad-Schraubgetriebe und Schneckenradgetriebe dagegen werden als Schraubwälzgetriebe bezeichnet.

Sämtliche bekannten Getriebetypen zeichnen sich durch irgendwelche spezifischen Vorteile aus, sind jedoch ausnahmslos mit gewissen Nachteilen behaftet.

Die Wälzgetriebe zum Beispiel sind einfach herzustellen, und haben, bedingt durch das reine Wälzen beim Abrollen einen geringen Verschleiss und einen guten Wirkungsgrad.

Die Schraubwälzgetriebe zeichnen sich zum Beispiel durch einen ruhigen Lauf aus.

Aus dem Dokument NL-A-9 201 836 ist ein Zahnradgetriebe mit zwei Verzahnungselementen bekannt. Das erste Verzahnungselement ist ein Zahnrad mit einer gekrümmten Wälzfläche. Das zweite Verzahnungselement ist eine Zahnstange und kann als Zahnrad mit einem unendlich grossen Durchmesser betrachtet werden, mit einer Bogenverzahnung mit parallel verlaufenden Links- und Rechtsflanken.

Mit keinem der bekannten Getriebetypen lassen sich mit vernünftigem Aufwand und kompakten Abmessungen grosse Übersetzungen realisieren. Die Ausnahme sind Schneckengetriebe, welche jedoch einen schlechten Wirkungsgrad aufweisen. Planetengetriebe sind in dem Zusammenhang als Spezialfall zu betrachten, da diese pro Übersetzungsstufe mehr als ein Zahnradpaar benötigen.

Es ist eine Aufgabe der vorliegenden Erfindung die Nachteile der bekannten Getriebetypen zu vermeiden.

Es ist eine Aufgabe der vorliegenden Erfindung möglichst nur alle Vorzüge der bekannten Getriebe in einer neuen Getriebegeometrie zusammenzufassen und ein entsprechendes Zahnrad bzw. Zahnradgetriebe bereitzustellen.

Diese Aufgaben werden durch die kennzeichnenden Merkmale des Patentanspruches 1 und durch die kennzeichnenden Merkmale des patentanspruches 11 jeweils im Zusammenhang mit den Merkmalen des Oberbegriffs gelöst.

Verschiedene vorteilhafte Ausführungsformen sind den abhängigen Ansprüchen 2 - 10 und 12 zu entnehmen.

Weitere Einzelheiten und Vorteile der Erfindung werden im Folgenden an Hand von bevorzugten Ausführungsbeispielen unter Bezugnahme auf die Zeichnung, die als vereinfachte schematische Darstellungen ausgeführt sind, beschrieben. Es zeigen:
- **Figur 1:**: ein erstes Zahnradpaar (Torusspiralgetriebe) in perspektivischer Darstellung mit treibendem Torusrad und getriebenem Stirnrad, gemäss Erfindung;
- **Figur 2:**: das erste Zahriradpaar gemäss Figur 1, schematisch abgebildet, mit den beiden Funktionsflächen (Wälzflächen), die einerseits einen Torusabschnitt und andererseits einen Zylinder darstellen;
- **Figur 3a :**: einen Ausschnitt eines bogenverzahnten Stirnrades, gemäss Erfindung, mit dessen nicht parallelen linken (z.B. konkaven, konvexen oder geraden) und rechten konvexen Zahnflanken;
- **Figur 3b :**: einen Ausschnitt einer Draufsicht des bogenverzahnten Stirnrades, gemäss Figur 3a;
- **Figur 4 :**: den Zahneingriff zwischen einem Torusrad und einem bogenverzahnten Stirnrad gemäss einem weiteren erfindungsgemässen Zahnradpaar;
- **Figur 5:**: das Torusrad mit davor liegendem bogenverzahnten Stirnrad, gemäss Figur 4;
- **Figur 6 :**: eine schematische Darstellung der drei Zahnverläufe eines mit drei Zähnen versehenen Torusrades, gemäss einer weiteren erfindungsgemässen Ausführungsform;
- **Figur 7 :**: eine schematische Darstellung eines Torusrades mit dem an mehreren Stellen von der idealen Spirale abweichenden Zahnverlauf, gemäss einer weiteren erfindungsgemässen Ausführungsform;
- **Figur 8 :**: den Zahneingriff zwischen einem Torusrad mit verbreiterter Lückenweite und einem bogenverzahntem Stirnrad mit verbreiterter Zahndicke, gemäss einer weiteren erfindungsgemässen Ausführungsform;
- **Figur 9 :**: die Zähne eines weiteren Torusrades mit einer Möglichkeit der Gestaltung des Zahnflankenprofils, gemäss einer weiteren erfindungsgemässen Ausführungsform;
- **Figur 10 :**: die Zähne des Stirnrades mit einer Möglichkeit der Gestaltung des Zahnflankenprofils, gemäss einer weiteren erfindungsgemässen Ausführungsform;
- **Figur 11:**: die Zähne und Wälzfläche eines weiteren Zahnrades mit einer konvexen, torusschichtförmigen Wälzfläche, gemäss Erfindung;
- **Figur 12:**: die Zähne und Wälzfläche eines weiteren Zahnrades mit einer konkaven, torusschichtförmigen Wälzfläche, gemäss Erfindung;
- **Figur 13:**: die Zähne und Wälzfläche eines weiteren Zahnrades mit einer konvexen, torusschichtförmigen Wälzfläche, gemäss Erfindung;
- **Figur 14:**: die Zähne und Wälzfläche eines weiteren Zahnrades mit einer konkaven, torusschichtförmigen Wälzfläche, gemäss Erfindung;
- **Figur 15:**: die Zähne und Wälzfläche eines weiteren Zahnrades mit einer konvexen, kugelschichtförmigen Wälzfläche, gemäss Erfindung;
- **Figur 16:**: die Zähne und Wälzfläche eines weiteren Zahnrades mit einer konkaven, kugelschichtförmigen Wälzfläche, gemäss Erfindung;
- **Figur 17a** :: eine Draufsicht eines Radpaares, gemäss Erfindung;
- **Figur 17b :**: eine Seitenansicht des Radpaares gemäss Figur 17a; und
- **Figur 18**:: ein weiteres Radpaar, gemäss Erfindung.

### Detaillierte Beschreibung

Im Folgenden werden verschiedene Ausführungsbeispiel gegeben. Als Grundlage für die Begriffdefinition dienen die im Gebiet der Verzahnungstechnik gebräuchlichen Ausdrücke, die zum Beispiel dem DIN 3998 Handbuch oder dem DIN 868 Handbuch zu entnehmen sind.

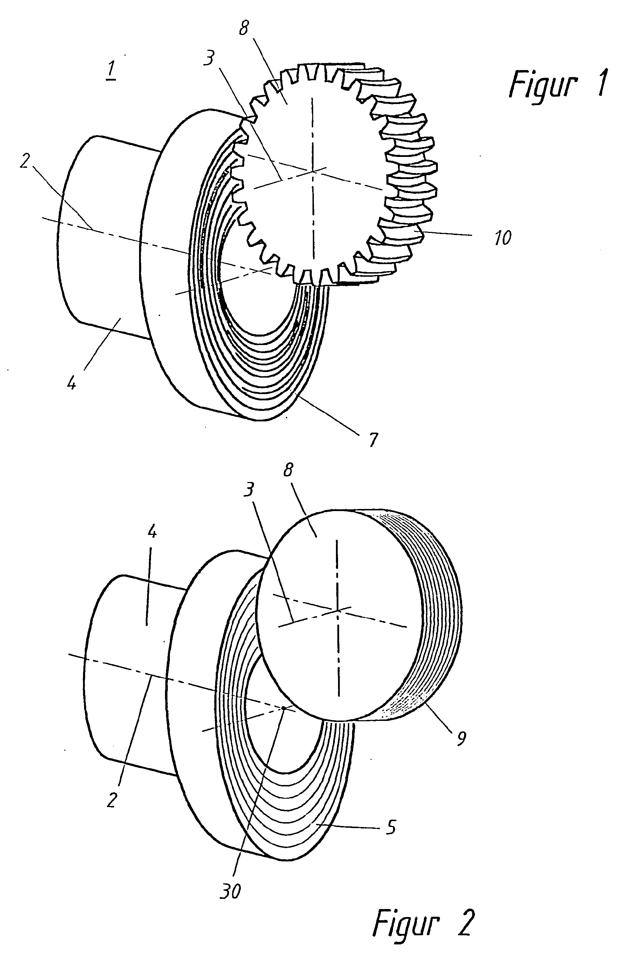

Ein erstes erfindungsgemässes Zahnradpaar **1** (Zahnradgetriebe) gemäss Figur 1 besteht aus einem ersten Zahnrad **4** und einem zweiten Zahnrad **8.** Das erste Zahnrad **4** dient als Antriebsrad **4** und das zweite Zahnrad **8** als Abtriebsrad. Die beiden Radachsen **2** und **3** stehen in dem gezeigten Beispiel ungefähr senkrecht zueinander, d.h. der Achsenwinkel beträgt 90° ± 10°. Das treibenden Rad **4** ist ein sogenanntes Torusrad mit einer Verzahnung **7** die spiralförmig verläuft. Das getriebene Rad **8** ist ein Stirnrad mit einer bogenförmigen Aussenverzahnung **10.**

Durch diese Anordnung der Achsen **2** und **3** und der Verzahnung ergeben sich gemäss Figur 2 zwei geometrisch unterschiedliche Wälzflächen (schraffiert dargestellt), nämlich einen ringförmige Fläche (Torusabschnitt) **5** und eine Zylinderfläche **9.** Aus obigen Gegebenheiten kann das Zahnradgetriebe **1** somit als Schraubwälzgetriebe bezeichnet werden. Das Torusrad **4** ist mit einem oder mehreren Zähnen **7** versehen, wobei jeder der Zähne **7** einen spiralförmig verlaufenden Zahnverlauf aufweist. Der Koordinatenursprung **30** aller spiralförmig verlaufenden Zahnverläufe ist dabei vorzugsweise ein gemeinsamer, auf der Radachse **2** liegender Punkt.

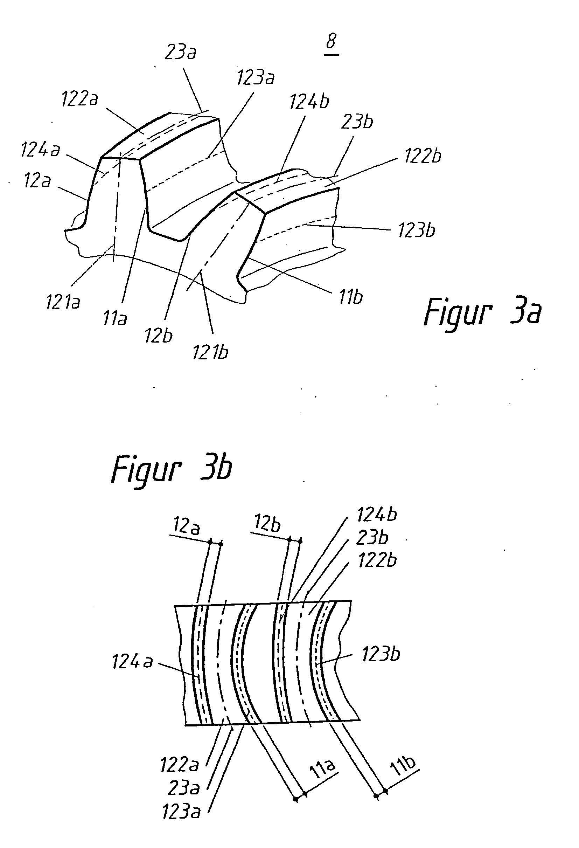

Das Stirnrad **8** besitzt mindestens drei bogenförmig angelegte Zähne **10.** Ein beispielhaftes Detail bezüglich der Bogenverzahnung des Stirnrads **8** mit konkaven Linksflanken **11a, 11b** und konvexen Rechtsflanken **12a, 12b** ist in den Figuren 3a und 3b als Ausschnitt des Stirnrades **8** dargestellt. Es sei angemerkt, dass die Linksflanken anstatt konkav auch gerade oder konvex sein können. Der Zahnverlauf **23a** und **23b** ist im Zusammenhang mit der vorliegenden Beschreibung als Schnittlinie (Durchtrittslinie) der Zahnmittelebenen **121a** bzw. **121b** mit den oberen Zahnflächen **122a, 122b** definiert. Die Zahnmittelebenen **121a** und **121b** verlaufen fächerförmig zueinander und haben eine gemeinsame Schnittachse, die mit der Drehachse des Stirnrades **8** zusammenfällt. Diese Schnittachse ist nicht in Figur 3 sichtbar. Die erfindungsgemässen Stirnräder **8** zeichnen sich dadurch aus, dass jeder wirksame Flankenbereich jeweils mindestens eine Linie aufweist, die parallel zur selben Linie des benachbarten Zahnes verläuft. Die konkave Linksflanke **11a** weist im gezeigten Beispiel z.B. die Linie **123a** auf, die parallel zur selben Linie **123b** der konkaven Linksflanke **11b** des benachbarten Zahnes verläuft. Die konvexe Rechtsflanke **12a** weist im gezeigten Beispiel die Linie **124a** auf, die parallel zur selben Linie **124b** der konvexen Rechtsflanke **11b** des benachbarten Zahnes verläuft.

Gemäss Erfindung kann die Innenflanke (in Figuren 3a und 3b als Linksflanken **11a, 11b** bezeichnet) konvex, gerade oder konkav geformt sein. Die Aussenflanken (in Figuren 3a und 3b als Rechtsflanken **12a, 12b** bezeichnet) sind konvex (oder als polygonale Annäherung einer konvexen Form) ausgeführt, wobei der Krümmungsradius dieser Flanken grösser ist als der Radius des Zahnverlaufs der spiralförmig angelegten Zähne auf der Wälzfläche des Torusrades **5.**

Der Zahnverlauf **23a** und der Verlauf der Linien **123a** und **124a** ist nicht notwendigerweise parallel.

Vorzugsweise weist das zweite Zahnrad **8** eine zylinderförmige Wälzfläche **9** auf, die konzentrisch zu der Radachse **3** des zweiten Rades **8** angeordnet ist.

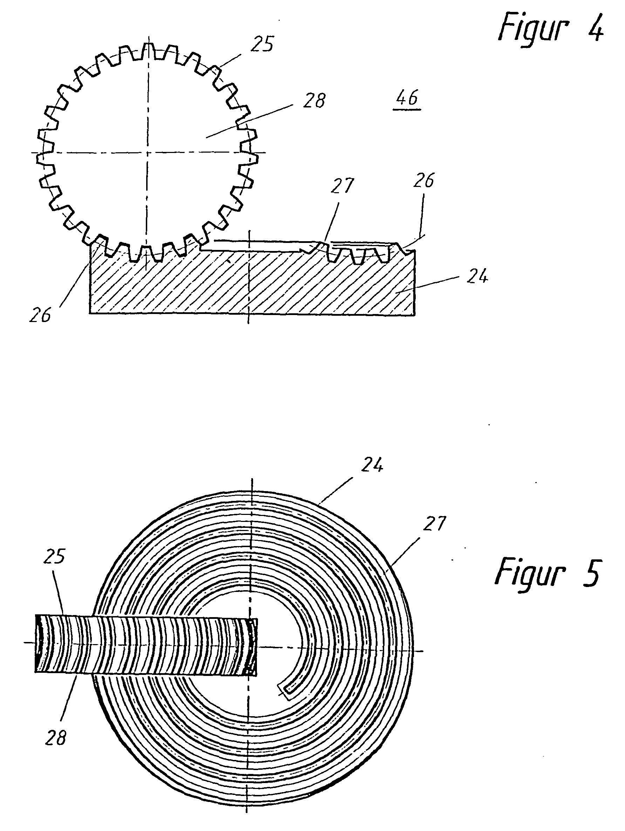

Eine weitere Ausführungsform eines Zahnradpaares **46** gemäss Erfindung ist in Figur 4 gezeigt. Das Torusrad **24** weist eine mindestens teilweise gekrümmte Wälzfläche **26** auf, die eine Verzahnung mit mindestens einem Zahn **27** trägt. Der/die Zähne **27** haben einen spiralförmig verlaufende Zahnverlauf. In der Figur 4 ist der Zahneingriff des Torusrades **24** und des Stirnrades **28** dargestellt. Die gekrümmte Wälzfläche **26** ist als konkaver Torusabschnitt ausgeführt.

Der Verlauf der spiralförmig angelegten Zähne **27** des Torusrades **24** und der Zähne **25** des Stirnrades **28** und das Zusammenspiel der Zähne **27** und der bogenverzahnten Zähne **25** ist in Figur 5 wiederum mit dem gezeichneten Torusrad **24** und dem Stirnrad **28** ersichtlich.

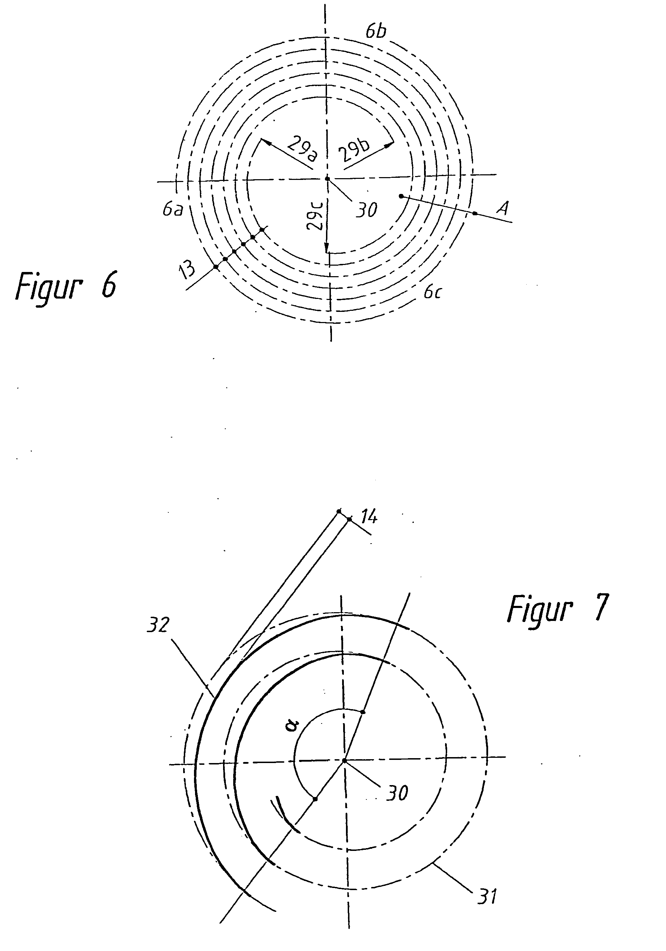

Um gemäss Figur 6 nicht nur Übersetzungsverhältnisse entsprechend der Zähnezahl eines (getriebenen) Zylinderrades zu erhalten, kann das (treibende) Torusrad gemäss einer weiteren Ausführungsform mehrere Zähne aufweisen. Ein solches Torusrad wird als mehrgängiges Torusrad bezeichnet. Die Zahnverläufe **6a, 6b, 6c** der Zähne eines solchen Torusrades sind auf der Wälzfläche als Spiralen angeordnet, deren gemeinsamer Koordinatenursprung **30** auf der Radachse des Torusrades liegt. Vorzugsweise handelt es sich bei den Spiralen um sogenannte Archimedische Spiralen, wie in Figur 6 angedeutet, die sich durch einen konstanten Windungsabstand über den gesamten Definitionsbereich **A** auszeichnet.

In der in Figur 6 gezeigten Ausführungsform haben die Spiralen von dem gemeinsamen Koordinatenursprung **30** aus gesehen in radialer Richtung eine gleichmässige Zahnteilung des Abstandes der Zahnverläufe **6a, 6b, 6c.** Vorzugsweise sind die Ursprungsvektoren **29a, 29b, 29c** der spiralförmig verlaufenden Zahnverläufe **6a, 6b, 6c** gleichmässig auf 360° verteilt, damit die gleichmässige Zahnteilung bestehen bleibt.

Figur 7 betrifft eine spezielle Ausführungsform eines erfindungsgemässen Getriebes. Bei den bisher beschriebenen Ausführungsformen der Erfindung (siehe zum Beispiel Figur 5 oder 6), verlaufen die Zahnverläufe **6a, 6b, 6c** der Spiralverzahnung **7** bzw. **27** des treibenden Rades **4** bzw. **24** mit gleichmässiger Steigung um den Koordinatenursprung **30.** Somit ist eine gleichmässige Drehzahl des getriebenen Stirnrades **8** gewährleistet. Sind jedoch ungleichförmige Winkelgeschwindigkeiten am Stirnrad **8** bzw. **25** erwünscht, so können diese durch Abweichungen des gleichmässigen Verlaufs der Spirale vorgenommen werden. Es können zum Beispiel sogenannte Abplattungen im Krümmungsverlauf der Spiralen vorgesehen werden. Im Zusammenhang mit der vorliegenden Erfindung wird eine Abweichung des Krümmungsverlaufs einer Spirale vom gleichmässigen Verlauf als Abplattung bezeichnet. In Figur 7 ist das Beispiel eines Zahnverlaufs **31** mit Abplattungen **14** gezeigt. Der gleichmässige Verlauf des Zahnverlaufs **31** ist in gestrichelter Form dargestellt. In einem Winkelausschnitt α weicht der Zahnverlauf **31** vom gleichmässigen Verlauf ab, wie durch die dicke Linienführung **32** angedeutet.

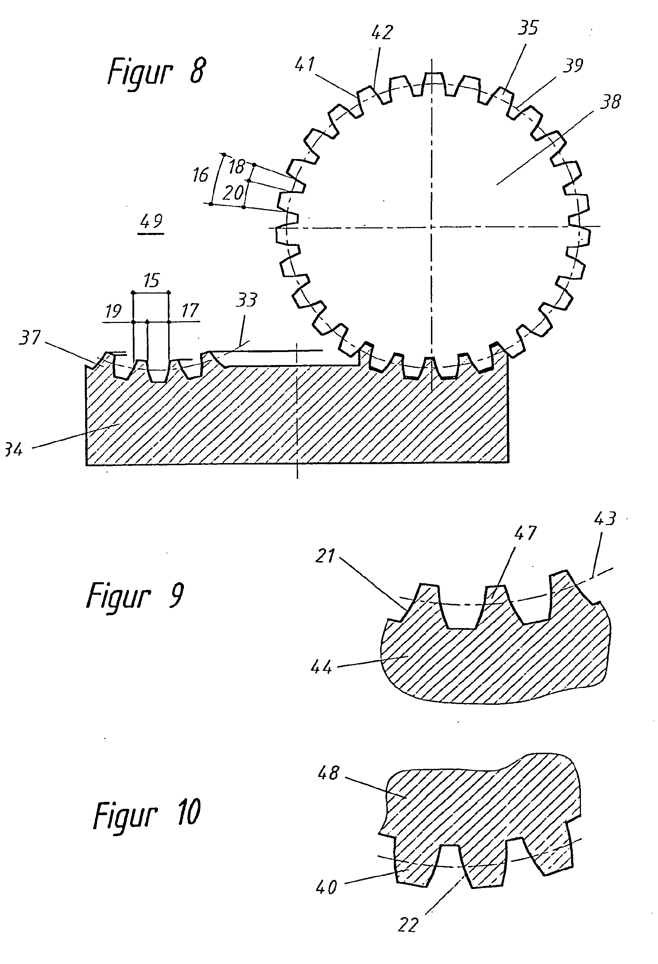

Figur 8 zeigt eine weitere Ausführungsform eines Zahnradpaares **49,** gemäss Erfindung. Das erste Zahnrad 34 hat ein mindestens teilweise gekrümmte Wälzfläche **33** (in Figur 8 durch eine gestrichelte Linie angedeutet). Auf der Wälzfläche **33** befindet sich eine Verzahnung mit mehreren Zähnen **37.** Die Zahnverläufe der Zähne **37** haben einen spiralförmigen Verlauf. Das zweite Rad **38** ist ein Zylinderrad mit einer zylinderförmigen Wälzfläche **39** (in Figur 8 durch eine gestrichelte, kreisförmige Linie angedeutet), die eine Aussenverzahnung mit Zähnen **35** aufweist. Bei der Aussenverzahnung handelt es sich um eine Bogenverzahnung mit konkaven Linksflanken **41** und konvexen Rechtsflanken **42,** wobei die konkaven Linksflanken **41** nicht parallel zu den konvexen Rechtsflanken **42** verlaufen. In Figur 8 ist die Möglichkeit einer bestimmten Teilung **15, 16** des Zahnrades **34** bzw. des Zylinderrades **38** gezeigt. Bei der Teilung **15, 16** handelt es sich um eine ungleiche Teilung in Zahnlücken **17, 18** und Zahnbreiten **19, 20.** Vorzugsweise erfolgt die Teilung so, dass das Zahnrad **34** Lücken **17** zwischen benachbarten Zähnen **37** aufweist, deren Weite **17** anders gewählt ist als die Weite **18** der Lücken zwischen benachbarten Zähnen **35** des Zylinderrades **38.** In einem anderen Fall ist die Dicke **19** der Zähne **37** (auch Zahnbreite genannt) des Zahnrades **34** so gewählt, dass sie sich von der Dicke **20** der Zähne **35** des Zylinderrades **38** unterscheidet. Es ist auch eine Kombination dieser beiden Angaben möglich. Durch eine solche Teilung können die spezifischen Gegebenheiten bezüglich Festigkeitswerte beim treibenden bzw. getriebenen Rad entsprechend berücksichtigt werden.

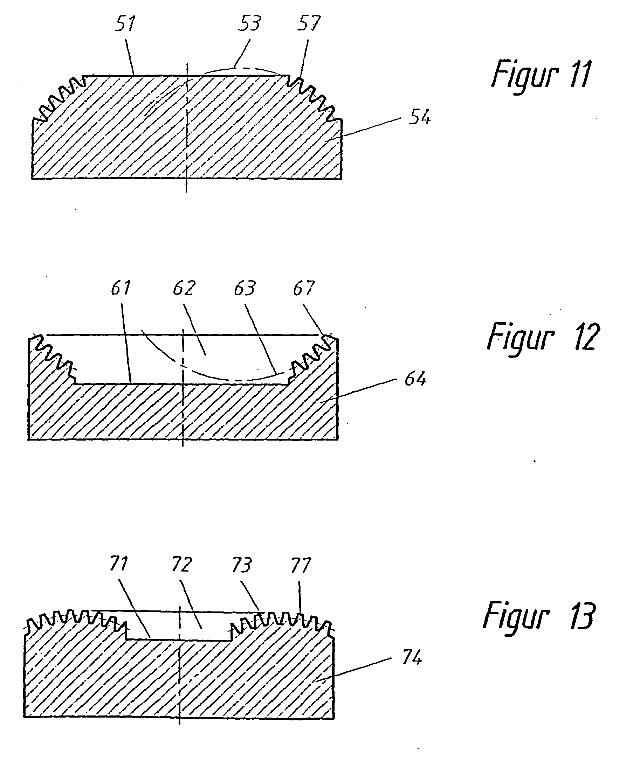

Zwei mögliche Zahnformen gemäss Erfindung sind aus den Figuren 9 und 10 ersichtlich. Figur 9 zeigt mehrere Zähne **47** eines weiteren Torusrades **44.** Die gekrümmte Wälzfläche **43** ist in Figur 9 durch eine gestrichelte Linie angedeutet. Die Wälzfläche **43** ist in der gezeigten Ausführungsform konkav ausgeführt. Es gibt zahlreiche Möglichkeiten zur Gestaltung des Zahnflankenprofils der Zähne **47.** Figur 10 zeigt einige Zähne **40** eines Stirnrades **48.** Die Wälzfläche **45** des Stirnrades **48** ist zylinderförmig. Auch bei den Zähnen **40** gibt es zahlreiche Möglichkeiten zur Gestaltung des Zahnflankenprofils. Die Wahl der Zahnform betreffend Flankenprofil **21** und **22** wird beeinflusst vom Herstellungsverfahren, dem eingesetzten Fertigungswerkzeug und den gewünschten Eigenschaften des Getriebes.

In Figur 11 sind die Zähne **57** und die Wälzfläche **53** eines weiteren erfindungsgemässen Zahnrades **54** gezeigt. Die Wälzfläche **53** ist konvex und hat die Form einer Torusschicht. Das Zahnrad **54** hat in dem gezeigten Beispiel eine erhabenen, vorzugsweise eben ausgeführte Oberfläche **51.**

In Figur 12 sind die Zähne **67** und die Wälzfläche **63** eines weiteren erfindungsgemässen Zahnrades **64** gezeigt. Die Wälzfläche **63** ist konkav und hat die Form einer Torusschicht. Das Zahnrad **64** hat eine zurückversetzte, vorzugsweise eben ausgeführte Oberfläche **61.** Die Oberfläche **61** liegt in dem gezeigten Beispiel in einer Ausnehmung **62.**

In Figur 13 sind die Zähne **77** und die Wälzfläche **73** eines weiteren erfindungsgemässen Zahnrades **74** gezeigt. Die Wälzfläche **73** ist konvex und hat die Form eines Torusabschnitts. Das Zahnrad **74** hat eine zurückversetzte, vorzugsweise eben ausgeführte Oberfläche **71.** Die Oberfläche **71** liegt in dem gezeigten Beispiel in einer Ausnehmung **72.**

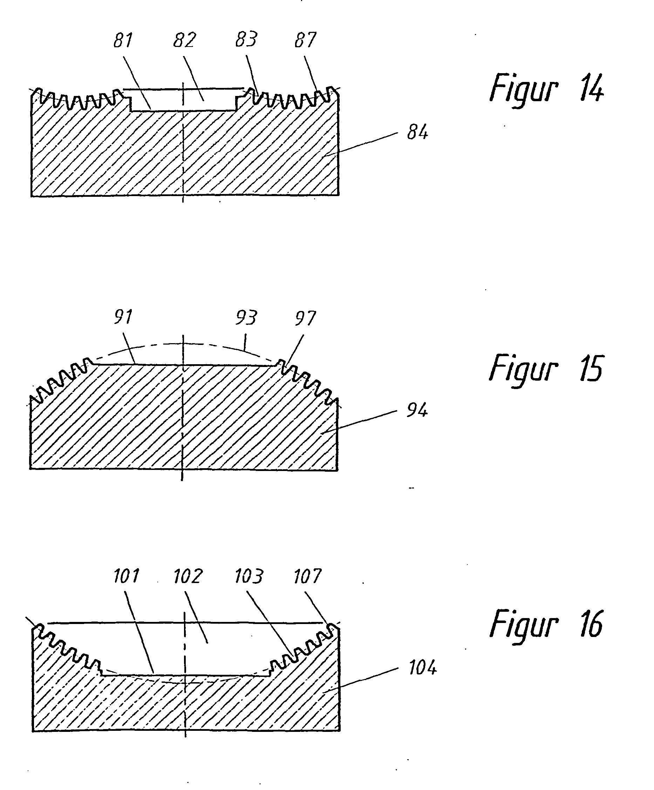

In Figur 14 sind die Zähne **87** und die Wälzfläche **83** eines weiteren erfindungsgemässen Zahnrades **84** gezeigt. Die Wälzfläche **83** ist konkav und hat die Form eines Torusabschnitts. Das Zahnrad **84** hat eine zurückversetzte, vorzugsweise eben ausgeführte Oberfläche **81.** Die Oberfläche **81** liegt in dem gezeigten Beispiel in einer Ausnehmung **82.**

In Figur 15 sind die Zähne **97** und die Wälzfläche **93** eines weiteren erfindungsgemässen Zahnrades **94** gezeigt. Die Wälzfläche **93** ist konvex und hat die Form einer Kugelschicht. Das Zahnrad **94** hat in dem gezeigten Beispiel eine leicht zurückversetzte, vorzugsweise eben ausgeführte Oberfläche **91.**

In Figur 16 sind die Zähne **107** und die Wälzfläche **103** eines weiteren erfindungsgemässen Zahnrades **104** gezeigt. Die Wälzfläche **103** ist konkav und hat die Form einer Kugelschicht. Das Zahnrad **104** hat in dem gezeigten Beispiel eine zurückversetzte, vorzugsweise eben ausgeführte Oberfläche **101.** Die Oberfläche **101** liegt in einer Ausnehmung **102.**

Die Ausführungsformen gemäss den Figuren 12, 14 und 16 zeichnen sich dadurch aus, dass sich stets mehr als zwei Zähne des Stirnrades im Eingriff befinden.

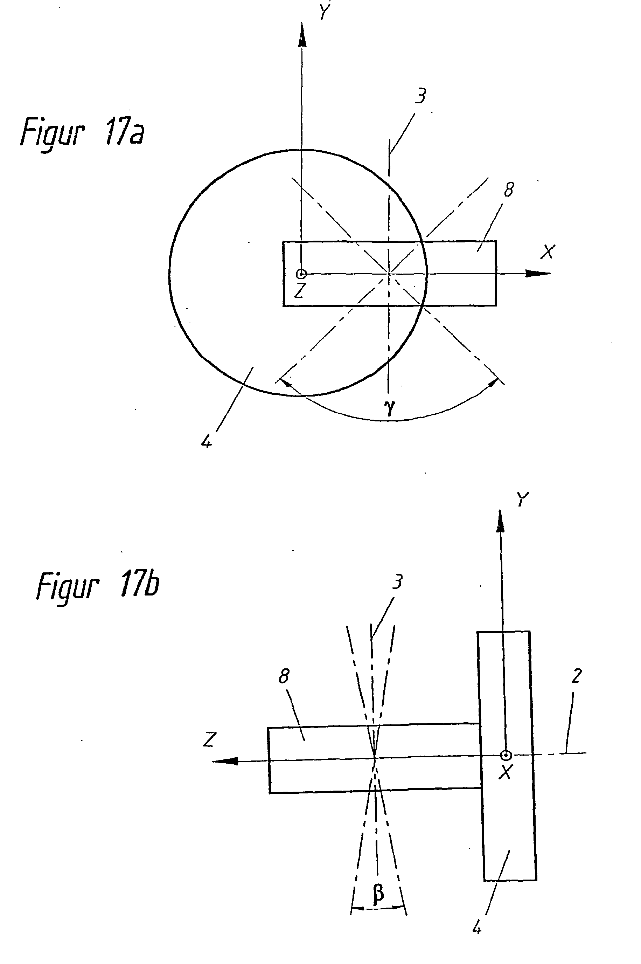

Die Einbaulage der beiden Räder des Radpaares 4 und 8 ist anhand eines x, y, z-Koordinatensystems in den Figuren 17a und 17b gezeigt. Die Drehachse 3 des Stirnrades 8 kann in der x-y Ebene von der senkrechten Stellung bei γ = 0° abweichen. Vorzugsweise gilt für den Winkel y: -45° < γ < 45°. Zusätzlich kann die Drehachse 3 leicht gegenüber der Horizontalen geneigt sein, wie in Figur 17b angedeutet. Die Neigung wird durch den Winkel β definiert, für den gilt: -10° < β < 10°.

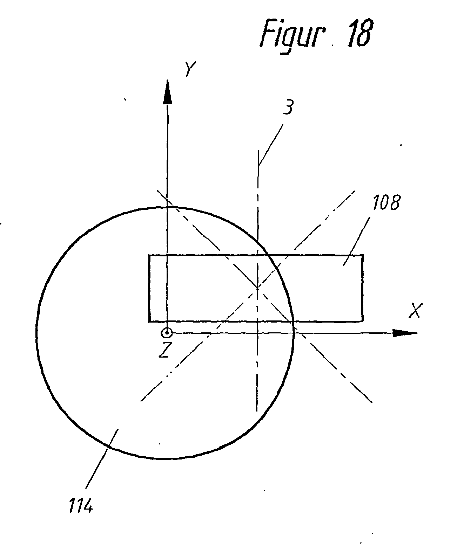

In einer weiteren Ausführungsform, die in Figur 18 angedeutet ist, ist das Stirnrad 108 gegenüber dem Torusrad 114 versetzt angeordnet.

Gemäss Erfindung weist eines der Zahnräder (auch als Torusrad bezeichnet) eine gekrümmte Wälzfläche auf, die zumindest in einem Abschnitt konkav oder konvex ausgeführt ist. Die Wälzfläche ist gemäss Erfindung also mindestens abschnittsweise torusförmig oder kugelförmig ausgelegt, wobei es sich bei dem Abschnitt der Wälzfläche um
- einen Torusabschnitt,
- einen Kugelabschnitt,
- eine Torusschicht oder
- eine Kugelschicht handelt.

Der Abschnitt der Wälzfläche ist konzentrisch zu der Radachse des Zahnrades angeordnet.

Das Einsatzgebiet oben beschriebenen Zahnradgetriebes erstreckt sich über die gesamte Antriebstechnik. Die Erfindung ist besonders geeignet für den Einsatz im Aufzugbau, Fahrzeugbau und im Maschinenbau allgemein. Besonders geeignet ist die Erfindung für den Einsatz in Seilbahnen, Kranhebezeugen usw.

Als erweiterte Variante kann das Zahnradgetriebe als mehrfache Radpaarung (sogenannter Getriebezug) gebaut werden. Es ist ebenso ein Getriebezug denkbar, der sowohl aus spiralverzahntem bzw. bogenverzahntem Radpaar als auch aus bekannten Radpaaren wie Stirnrad, Kegelrad oder anderen kombiniert wird.

In Teilapparaten, Rundtischen oder Rundschwenkeinheiten ist die Verwendung des dieser Patentschrift zugrundeliegenden Getriebes mit vielen Vorteilen verbunden. Ein solcher ist das geringe Zahnflankenspiel, welches durch die axiale Verschiebung des treibenden Planrades eingestellt werden kann.

Es ist ein Vorteil der erfindungsgemässen Zahnradpaare, dass diese selbsthemmend ausgeführt werden können. Bei einer solchen selbsthemmenden Ausführung kann das Stirnrad das Torusrad nicht antreiben.

Es ist auch von Vorteil, dass je nach Ausführungsform stets mehrere Zähne im Eingriff sind. Ausserdem lässt sich ein erfindungsgemässes Zahnradpaar kompakt aufbauen. Es sind Übersetzungen pro Zahnradpaarstufe von bis zu 200 realisierbar. Ein Zahnradpaar gemäss Erfindung zeichnet sich durch einen sehr hohen Wirkungsgrad aus, da zwischen den übertragenden Zahnflanken eine Flüssigkeitsreibung besteht.

Auch in der Fördertechnik, speziell in Kettenzügen, Seilzügen oder Liften ist der Einbau des dieser Patentschrift zugrundeliegenden Getriebes sehr vorteilhaft. Die in erwähnte Selbsthemmung kann Sicherheitselemente wie Bremsen ersetzen oder ergänzen.

## Patentansprüche

1. Zahnradgetriebe (1; 46; 49) mit einem ersten Rad (4; 24; 34; 44; 54; 64; 74; 84; 94; 104; 114) und einem zweiten Rad (8; 28; 38; 108), wobei
- das erste Rad (4; 24; 34; 44; 54; 64; 74; 84; 94; 104; 114) ein Zahnrad mit einer mindestens teilweise gekrümmten Wälzfläche (5; 26; 33; 43; 53; 63; 73; 83; 93; 103) ist, die einen Verzahnung mit mindestens einem Zahn (7; 27; 37; 47; 57; 67; 77; 87; 97; 107) aufweist, der einen spiralförmigen Zahnverlauf (6a, 6b, 6c) hat, und
- das zweite Rad (8; 28; 38; 108) ein Zylinderrad mit einer zylinderförmigen Wälzfläche (9; 26; 39) ist, die eine Aussenverzahnung aufweist die mindestens drei Zähne umfasst , **dadurch gekennzeichnet, daß** die Außenverzahnung eine Bogenverzahnung (10; 25; 35; 40) mit Linksflanken (11; 41) und mit konvexen Rechtsflanken (12; 42) bildet, wobei die Linksflanken (11; 41) nicht parallel zu den konvexen Rechtsflanken (12; 42) verlaufen.

2. Zahnradgetriebe (1; 46; 49) gemäss Anspruch 1, wobei das erste Rad (4; 24; 34; 44; 54; 64; 74; 84; 94; 104; 114) ein Torusrad ist und der spiralförmige Zahnverlauf (6a, 6b, 6c) als Archimedische Spirale ausgelegt ist, deren Koordinatenursprung (30) auf der Radachse (2) des ersten Rades (4; 24; 34; 44; 54; 64; 74; 84; 94; 104; 114) liegt.

3. Zahnradgetriebe (1; 46; 49) gemäss Anspruch 1, wobei das erste Rad (4; 24; 34; 44; 54; 64; 74; 84; 94; 104; 114) ein mehrgängiges Torusrad mit zwei oder mehr Zähnen ist, wobei die Zahnverläufe (6a, 6b, 6c) der Zähne auf der Wälzfläche (5; 26; 33; 43; 53; 63; 73; 83; 93; 103) als Spiralen ausgelegt sind, deren gemeinsamer Koordinatenursprung (30) auf der Radachse (2) des erste Rades (4; 24; 34; 44; 54; 64; 74; 84; 94; 104; 114) liegt, wobei sich vorzugsweise von dem gemeinsamen Koordinatenursprung (30) aus gesehen in radialer Richtung eine gleichmässige Teilung des Abstandes der Zahnverläufe (6a, 6b, 6c) ergibt.

4. Zahnradgetriebe (1; 46; 49) gemäss Anspruch 1 oder 2, wobei der/die spiralförmig/e Zahnverlauf/läufe (6a, 6b, 6c) in einem oder mehreren Bereichen von der theoretischen Form (31) abweicht, sodass dort der Zahnverlauf (6a, 6b, 6c) eine Abplattung (14) aufweist.

5. Zahnradgetriebe (1; 46; 49) gemäss einem der Ansprüche 1 bis 4, wobei
- das erste Rad (4; 24; 34; 44; 54; 64; 74; 84; 94; 104; 114) Lücken (17) zwischen benachbarten Zähnen (7; 27; 37; 47; 57; 67; 77; 87; 97; 107) aufweist, deren Weite anders gewählt ist als die Weite der Lücken (18) zwischen benachbarten Zähnen (10; 25; 35; 40) des zweiten Rades (8; 28; 38), und/oder
- die Dicke (19) der Zähne (7; 27; 37; 47; 57; 67; 77; 87; 97; 107) des ersten Rades (4; 24; 34; 44; 54; 64; 74; 84; 94; 104; 114) anders gewählt ist als die Dicke (20) der Zähne (10; 25; 35; 40) des zweiten Rades (8; 28; 38; 108).

6. Zahnradgetriebe (1; 46; 49) gemäss einem der Ansprüche 1 bis 5, wobei die Zähne (7; 27; 37; 47; 57; 67; 77; 87; 97; 107) des ersten Rades (4; 24; 34; 44; 54; 64; 74; 84; 94; 104; 114) und/oder die Zähne (10; 25; 35; 40) des zweiten Rades (8; 28; 38; 108) ein beliebiges Flankenprofil (21a, 21b, 22a, 22b) aufweisen können.

7. Zahnradgetriebe (1; 46; 49) gemäss einem der Ansprüche 1 bis 6, wobei die zylinderförmige Wälzfläche (9; 26; 39) konzentrisch zu der Radachse (3) des zweiten Rades (8; 28; 38; 108) angeordnet ist.

8. Zahnradgetriebe (1; 46; 49) gemäss einem der Ansprüche 1 bis 7, wobei die gekrümmte Wälzfläche (5; 26; 33; 43; 53; 63; 73; 83; 93; 103) zumindest in einem Abschnitt konkav oder konvex ausgeführt ist.

9. Zahnradgetriebe (1; 46; 49) gemäss einem der Ansprüche 1 bis 7, wobei die gekrümmte Wälzfläche (5; 26; 33; 43; 53; 63; 73; 83; 93; 103) zumindest in einem Abschnitt torusförmig oder kugelförmig ausgeführt ist.

10. Zahnradgetriebe (1; 46; 49) gemäss einem der Ansprüche 8 oder 9, wobei es sich bei dem Abschnitt um
- einen Torusabschnitt, oder
- einen Kugelabschnitt, oder
- eine Torusschicht, oder
- eine Kugelschicht handelt,
und der Abschnitt konzentrisch zu der Radachse (2) des ersten Rades (4; 24; 34; 44; 54; 64; 74; 84; 94; 104; 114) liegt.

11. Zahnrad zum Einbau in einem Zahnradgetriebe, bei dem das Zahnrad mit einem Zylinderrad ein Radpaar bildet, und wobei
- das Zahnrad eine mindestens teilweise gekrümmte Wälzfläche aufweist,
- eine Verzahnung mit mindestens einem Zahn auf der teilweise gekrümmten Wälzfläche vorhanden ist,
- der Zahn einen spiralförmig Zahnverlauf (6a, 6b, 6c) hat, und
- das Zahnrad so für den Einbau in das Radpaar ausgelegt ist, dass die Radachse des Zahnrades in einer definierten Lage in Bezug zu der Radachse des Zylinderrades verläuft, **dadurch gekennzeichnet, daß** der spiralförmige Zahnverlauf in einem Bereich oder mehreren Bereichen von der theoretischen Form (31) abweicht, sodass dort der Zahnverlauf (6a, 6b, 6c) eine Abplattung (14) aufweist.

12. Zahnrad gemäss Anspruch 11, wobei das Zahnrad ein Torusrad ist und der spiralförmige Zahnverlauf (6a, 6b, 6c) als Archimedische Spirale ausgelegt ist, deren Koordinatenursprung (30) auf der Radachse (2) des Zahnrades liegt.

## Claims

1. Gear drive (1; 46; 49) with a first wheel (4; 24; 34; 44; 54; 64; 74; 84; 94; 104; 114) and a second wheel (8; 28; 38; 108), in which
- the first wheel (4; 24; 34; 44; 54; 64; 74; 84; 94; 104; 114) is a gear with an at least partially curved rolling contact face (5; 26; 33; 43; 53; 63; 73; 83; 93; 103), displaying toothing with at least one tooth (7; 27; 37; 47; 57; 67; 77; 87; 97; 107) following a spiral course (6a, 6b, 6c), and
- the second wheel (8; 28; 38; 108) is a cylindrical wheel with a cylindrical rolling contact face (9; 26; 39) displaying outer toothing that comprises at least three teeth, **characterized in that** the outer toothing forms a curved toothing (10; 25; 35; 40) with left flanks (11; 41) and convex right flanks (12; 42), and the left flanks (11; 41) do not run parallel to the right flanks (12; 42).

2. Gear drive (1; 46; 49) according to Claim 1, in which the first wheel (4; 24; 34; 44; 54; 64; 74; 84; 94; 104; 114) is a toroid wheel and the spiral course (6a, 6b, 6c) is laid out as an Archimedean screw having the origin of its coordinates (30) on the axis (2) of the first wheel (4; 24; 34; 44; 54; 64; 74; 84; 94; 104; 114).

3. Gear drive (1; 46; 49) according to Claim 1, in which the first wheel (4; 24; 34; 44; 54; 64; 74; 84; 94; 104; 114) is a multi-threaded toroid wheel with two or more teeth, the spiral courses (6a, 6b, 6c) of the teeth on the rolling contact face (5; 26; 33; 43; 53; 63; 73; 83; 93; 103) are laid out as spirals having a common origin of their coordinates (30) on the axis (2) of the first wheel (4; 24; 34; 44; 54; 64; 74; 84; 94; 104; 114), so that preferably, viewed in a radial direction from the common origin of the coordinates (30), an even distribution of the interval between the spiral courses (6a, 6b, 6c) results.

4. Gear drive (1; 46; 49) according to Claim 1 or 2, in which the spiral shaped spiral courses (6a, 6b, 6c) deviate in one or more areas from the theoretical shape (31), so that the spiral course (6a, 6b, 6c) displays a flattening (14).

5. Gear drive (1; 46; 49) according to any one of Claims 1 to 4, in which
- the first wheel (4; 24; 34; 44; 54; 64; 74; 84; 94; 104; 114) displays spaces (17) between adjacent teeth (7; 27; 37; 47; 57; 67; 77; 87; 97; 107) the width of which is chosen to be different from the width of the spaces (18) between adjacent teeth (10; 25; 35; 40) of the second wheel (8; 28; 38), and/or
- the thickness (19) of the teeth (7; 27; 37; 47; 57; 67; 77; 87; 97; 107) of the first wheel (4; 24; 34; 44; 54; 64; 74; 84; 94; 104; 114) is chosen to be different from the thickness (20) of the teeth (10; 25; 35; 40) of the second wheel (8; 28; 38; 108).

6. Gear drive (1; 46; 49) according to any one of Claims 1 to 5, in which the teeth (7; 27; 37; 47; 57; 67; 77; 87; 97; 107) of the first wheel (4; 24; 34; 44; 54; 64; 74; 84; 94; 104; 114) and/or the teeth (10; 25; 35; 40) of the second wheel (8; 28; 38; 108) may display any desired flank profile (21a, 21b, 22a, 22b).

7. Gear drive (1; 46; 49) according to any one of Claims 1 to 6, in which the cylindrical rolling contact face (9; 26; 39) is positioned concentric to the axis (3) of the second wheel (8; 28; 38; 108).

8. Gear drive (1; 46; 49) according to any one of Claims 1 to 7, in which the curved rolling contact face (5; 26; 33; 43; 53; 63; 73; 83; 93; 103) is made concave or convex at least in a section.

9. Gear drive (1; 46; 49) according to any one of Claims 1 to 7, in which the curved rolling contact face (5; 26; 33; 43; 53; 63; 73; 83; 93; 103) is made toroid or spheroid at least in a section.

10. Gear drive (1; 46; 49) according to either of Claims 8 or 9, in which the section is
- a toroid section, or
- a spherical section, or
- a toroid segment, or
- a spherical segment,
and the section is concentric to the axis (2) of the first wheel (4; 24; 34; 44; 54; 64; 74; 84; 94; 104; 114).

11. Gear wheel for incorporation in a gear drive, in which the wheel together with a cylindrical wheel, forms a gear pair, and in which
- the gear wheel displays an at least partially curved rolling contact face,
- toothing with at least one tooth is present on the partially curved rolling contact face,
- the tooth has a spiral course (6a, 6b, 6c), and
- the tooth is so designed for incorporation in the gear pair that the axis of the gear wheel runs through a defined position in relation to the axis of the cylindrical wheel, **characterized in that** the spiral tooth course, in one zone or in several zones, deviates from the theoretical shape (31), so that there the spiral course (6a, 6b, 6c) displays a flattening (14).

12. Gear wheel according to Claim 11, the gear wheel being a toroid wheel and the spiral tooth course (6a, 6b, 6c) being laid out as an Archimedean screw having the origin of their coordinates (30) on the axis (2) of the gear wheel.

## Revendications

1. Engrenage (1 ; 46 ; 49) muni d'une première roue (4 ; 24 ; 34 ; 44 ; 54 ; 64 ; 74 ; 84 ; 94 ; 104 ; 114) et d'une deuxième roue (8 ; 28 ; 38 ; 108),
- la première roue (4 ; 24 ; 34 ; 44 ; 54 ; 64 ; 74 ; 84 ; 94 ; 104 ; 114) étant une roue dentée avec une surface primitive de fonctionnement (5 ; 26 ; 33 ; 43 ; 53 ; 63 ; 73 ; 83 ; 93 ; 103) incurvée, au moins en partie, ladite surface possédant une denture d'au moins une dent (7 ; 27 ; 37 ; 47 ; 57 ; 67 ; 77 ; 87 ; 97 ; 107) dont la trajectoire est en forme de spirale (6a, 6b, 6c), et
- la deuxième roue (8 ; 28 ; 38 ; 108) étant une roue cylindrique avec une surface primitive de fonctionnement (9 ; 26 ; 39) cylindrique, ladite surface possédant une denture extérieure comprenant au moins trois dents, **caractérisée en ce que** la denture extérieure forme une denture courbe (10 ; 25 ; 35 ; 40) avec des flancs gauches (11 ; 41) et des flancs droits convexes (12 ; 42), la trajectoire des flancs gauches (11 ; 41) n'étant pas parallèle à celle des flancs droits convexes (12 ; 42).

2. Engrenage (1 ; 46 ; 49) conforme à la revendication 1, la première roue (4 ; 24 ; 34 ; 44 ; 54 ; 64 ; 74 ; 84 ; 94 ; 104 ; 114) étant une roue torique et la trajectoire en spirale de la dent (6a, 6b, 6c) étant conçue comme une spirale d'Archimède dont l'origine des coordonnées (30) se situe sur l'axe (2) de la première roue (4 ; 24 ; 34 ; 44 ; 54 ; 64 ; 74 ; 84 ; 94 ; 104 ; 114).

3. Engrenage (1 ; 46 ; 49) conforme à la revendication 1, la première roue (4 ; 24 ; 34 ; 44 ; 54 ; 64 ; 74 ; 84 ; 94 ; 104 ; 114) étant une roue torique à filets multiples comprenant deux dents ou plus, les trajectoires des dents (6a, 6b, 6c) sur la surface primitive de fonctionnement (5 ; 26 ; 33 ; 43 ; 53 ; 63 ; 73 ; 83 ; 93 ; 103) étant conçues en forme de spirales dont l'origine commune des coordonnées (30) se situe sur l'axe (2) de la première roue (4 ; 24 ; 34 ; 44 ; 54 ; 64 ; 74 ; 84 ; 94 ; 104 ; 114), d'où il s'ensuit que les trajectoires des dents (6a, 6b, 6c) sont réparties selon un intervalle régulier, dans le sens radial, lorsqu'on les considère de préférence à partir de l'origine commune des coordonnées (30).

4. Engrenage (1 ; 46 ; 49) conforme à la revendication 1 ou 2, la/les trajectoire(s) en spirale des dents (6a, 6b, 6c) déviant, dans une ou plusieurs zone(s), de la forme théorique (31), de sorte que la trajectoire de la dent (6a, 6b, 6c) présente à cet endroit un aplatissement (14).

5. Engrenage (1 ; 46 ; 49) conforme à l'une des revendications 1 à 4,
- la première roue (4 ; 24 ; 34 ; 44 ; 54 ; 64 ; 74 ; 84 ; 94 ; 104 ; 114) comportant des interstices (17), entre dents adjacentes (7 ; 27 ; 37 ; 47 ; 57 ; 67 ; 77 ; 87 ; 97 ; 107), dont la largeur est choisie pour être différente de celle des interstices (18) situés entre les dents adjacentes (10 ; 25 ; 35 ; 40) de la deuxième roue (8 ; 28 ; 38) et/ou
- l'épaisseur (19) des dents (7 ; 27 ; 37 ; 47 ; 57 ; 67 ; 77 ; 87 ; 97 ; 107) de la première roue (4 ; 24 ; 34 ; 44 ; 54 ; 64 ; 74 ; 84 ; 94 ; 104 ; 114) étant choisie pour être différente de l'épaisseur (20) des dents (10 ; 25 ; 35 ; 40) de la deuxième roue (8 ; 28 ; 38 ; 108).

6. Engrenage (1 ; 46 ; 49) conforme à l'une des revendications 1 à 5, les dents (7 ; 27 ; 37 ; 47 ; 57 ; 67 ; 77 ; 87 ; 97 ; 107) de la première roue (4 ; 24 ; 34 ; 44 ; 54 ; 64 ; 74 ; 84 ; 94 ; 104 ; 114) et/ou les dents (10 ; 25 ; 35 ; 40) de la deuxième roue (8 ; 28 ; 38 ; 108) pouvant présenter n'importe quel profil de flanc (21a, 21b, 22a, 22b).

7. Engrenage (1 ; 46 ; 49) conforme à l'une des revendications 1 à 6, la surface primitive de fonctionnement en forme de cylindre (9 ; 26 ; 39) étant disposée concentriquement à l'axe (3) de la deuxième roue (8 ; 28 ; 38 ; 108).

8. Engrenage (1 ; 46 ; 49) conforme à l'une des revendications 1 à 7, la surface primitive de fonctionnement incurvée (5 ; 26 ; 33 ; 43 ; 53 ; 63 ; 73 ; 83 ; 93 ; 103) étant réalisée, au moins dans un segment, dans une forme concave ou convexe.

9. Engrenage (1 ; 46 ; 49) conforme à l'une des revendications 1 à 7, la surface primitive de fonctionnement incurvée (5 ; 26 ; 33 ; 43 ; 53 ; 63 ; 73 ; 83 ; 93 ; 103) étant réalisée, au moins dans un segment, en forme de tore ou de sphère.

10. Engrenage (1 ; 46 ; 49) conforme à l'une des revendications 8 ou 9, le segment considéré étant
- un segment torique, ou
- un segment sphérique, ou
- une zone torique, ou
- une zone sphérique,
et ledit segment étant placé concentriquement à l'axe (2) de la première roue (4 ; 24 ; 34 ; 44 ; 54 ; 64 ; 74 ; 84 ; 94 ; 104 ; 114).

11. Roue dentée destinée à être intégrée dans un engrenage dans lequel la roue dentée forme, avec une roue cylindrique, un couple de roues,
- la roue dentée présentant une surface primitive de fonctionnement au moins partiellement incurvée,
- la surface primitive de fonctionnement partiellement incurvée comportant une denture d'au moins une dent,
- la dent ayant une trajectoire en forme de spirale (6a, 6b, 6c), et
- la roue dentée étant conçue de telle manière, pour son insertion dans le couple de roues, que l'axe de la roue dentée se trouve dans une position bien définie par rapport à l'axe de la roue cylindrique, **caractérisée en ce que** la trajectoire spirale de la dent dévie, dans une ou plusieurs zones, de la forme théorique (31), ce qui fait que la trajectoire de la dent (6a, 6b, 6c) présente à cet endroit un aplatissement (14).

12. Roue dentée conforme à la revendication 11, la roue dentée étant une roue torique et la trajectoire spirale de la dent (6a, 6b, 6c) étant conçue comme une sphère d'Archimède dont l'origine des coordonnées (30) se situe sur l'axe (2) de la roue dentée.
